# EUROPÄISCHE PATENTSCHRIFT

(11) **EP 0 942 267 B1**
(45) Veröffentlichungstag und Bekanntmachung des Hinweises auf die Patenterteilung: **30.08.2006**
(21) Anmeldenummer: 99100338.5
(22) Anmeldetag: 13.01.1999
(51) Int. Cl.: G01J 3/28, G01J 3/18

(54) **Spektrometer**
Spectrometer
Spectromètre

(30) Priorität: 11.03.1998 EP 98104395
(43) Veröffentlichungstag der Anmeldung: 15.09.1999
(73) Patentinhaber: Gretag-Macbeth AG, 8105 Regensdorf (CH); Enviros Monitors Limited, Totnes, Devon TQ9 5AL (GB); Centre Suisse d'Electronique et de Microtechnique SA ( CSEM), 8048 Zürich (CH)
(72) Erfinder: Teichmann, Helmut, CH-8047 Zürich (CH)
(74) Vertreter: Schwabe - Sandmair - Marx

(56) Entgegenhaltungen:
- EP-A- 0 489 286
- US-A- 4 744 618
- US-A- 4 983 039

## Beschreibung

Die Erfindung betrifft ein Spektrometer gemäss dem Oberbegriff des unabhängigen Anspruchs 1.

Die Einsatzbereiche solcher Spektrometer sind vielfältig. Typische Anwendungen sind zum Beispiel in Farbmessgeräten für die grafische Industrie oder die Lebensmittelindustrie, in Geräten für die Steuerung von industriellen Prozessen, in Messgeräten für die klinische Diagnostik, und so weiter.

Ein bekanntes Spektrometer der gattungsgemässen Art ist beispielsweise in der EP-A-0 489 286 beschrieben. Bei diesem bekannten Messkopf ist der Tragkörper als relativ dicke Bikonvex-Linse ausgebildet, wobei der Lichteintrittsspalt und die als Diodenzeile ausgebildete fotoelektrische Wandleranordnung an der einen und das Reflexionsgitter an der anderen der beiden gekrümmten Flächen der Bikonvexlinse angeordnet sind. Durch diesen Aufbau sollen relativ einfache Herstellbarkeit und Justage bei guter optischer Korrektur erreicht werden, jedoch erfordert der Aufbau den Einsatz aufwendiger gekrümmter, im allgemeinen aberrationskorrigierter Konkavgitter.
Diese Notwendigkeit kann durch den Einsatz von Spektrometern nach dem Fastie-Ebert-Prinzip - wie zum Beispiel in der Patentschrift US 4.744.618 "Demultiplexer" beschrieben - vermieden werden. Solche Spektrometer haben jedoch den Nachteil, dass sie im allgemeinen nur in positiver Beugungsordnung und mit einem verkippten Gitter- wie z.B. in Fig. 11 der genannten Patentschrift US 4.744.618 dargestellt - betrieben werden können.

Ausgehend von dem heutigen Stand der Technik ist es Aufgabe der vorliegenden Erfindung, ein Spektrometer der gattungsgemässen Art konzeptionell dahingehend zu verbessern, dass es ohne substantielle Einbussen der optischen Eigenschaften einerseits insbesondere wesentlich einfacher und kostengünstiger als vergleichbare bekannte Spektrometer in Serie herstellbar ist und anderseits die Voraussetzungen für eine Miniaturisierung schafft. Dies wird, ausgehend von einem einfachen Spektrometeraufbau ohne Verwendung von Konkavgittern insbesondere durch die Einführung einer neuen Optikanordnung erzielt. Gemäß der neuen Optikanordnung ist bevorzugt das Gitter so orientiert, daß die Gitterlinien (Gitterfurchen) von einer Seite des Gitters weglaufen, die dem Lichteinlaß benachbart ist. Das Gitter liegt bevorzugt in etwa zwischen Lichteinlaß und Lichtauslaß. Besonders bevorzugt grenzt der Lichteinlaß und der Lichtauslaß an das Gitter an, um eine kompakte Anordnung zu gewährleisten. Die Gitterlinien bzw. Gitterfurchen laufen dabei bevorzugt, wie bereits erwähnt, von dem Lichteinlaß weg in Richtung auf die Seite des Gitters, die auf der Seite liegt, bei der sich der Lichtauslaß befindet. Besonders bevorzugt wird durch die gewählte Anordnung von Lichteinlaß, Gitter und Lichtauslaß und durch die gewählte Gitterorientierung eine Richtung der spektralen Aufspaltung in der Auslaßfläche erzeugt, die im weiteren als "Dispersionsrichtung R" bezeichnet ist, die zumindest in etwa senkrecht zu einer Verbindungslinie zwischen dem Lichteinlaß und dem Lichtauslaßbereich ist, in dem die Brennflecke der einzelnen Spektralanteile liegen. Bevorzugt läuft die Verbindungslinie zwischen dem Lichteinlaß und einem zumindest in etwa in der Mitte gelegenen Punkt des flächigen Lichtauslaßbereichs.

Durch diese Anordnung kann - im Gegensatz zu der in Patentschrift US 4.744.618 in Fig. 11 gezeigten Anordnung - eine negative Beugungsordnung verwendet werden, so dass der Lichteinlass und die Auslassfläche relativ zu der Dispersionsrichtung R auf der gleichen Seite des Gitters zu liegen kommen, wodurch sich eine besonders kompakte Anordnung mit gleichzeitig geringer Verformung der Brennflecke erzielen läßt. Ausserdem kann das Reflexionsbeugungsgitter zumindest in etwa senkrecht zur Symmetrieachse A des Spektralmodulkörpers angeordnet werden.

Weiterhin wird durch den integralen Einsatz integrierter Mikrostrukturen, wie z.B. Grubenstukturen oder Mikroprismen, im Bereich des Lichteinlasses und der photoelektrischen Wandleranordnung, die gleichzeitig mit denen des Gitters fabriziert werden, die reproduzierbare Montage von weiteren Systemkomponenten wie zum Beispiel der Zuführungsfaser oder der -fasern, vereinfacht und so eine kostengünstige Serienherstellung ermöglicht. Weitere neue technische Ansätze bestehen in der Ausgestaltung des Konzepts, z.B. in der segmentierten Bedampfung der Konkavspiegelfläche zur Optimierung der Streulichtunterdrückung des Spektrometers.
Die Lösungen der dieser Erfindung zugrundeliegenden Aufgabe ergibt sich aus den im kennzeichnenden Teil des unabhängigen Anspruchs 1 beschriebenen Merkmalen. Besonders vorteilhafte Ausgestaltungen und Weiterbildungen sind Gegenstand der abhängigen Ansprüche.

Im folgenden wird die Erfindung anhand der Zeichnung näher erläutert. Es zeigen:
- Fig. 1: ein erstes Ausführungsbeispiels des erfindungsgemässen Spektrometers,
- Fig. 2: ein leicht abgewandeltes zweites Ausführungsbeispiel und
- Fig. 3: eine Aufsicht auf die Fläche, in der das Reflexionsbeugungsgitter liegt
- Fig. 4: eine perspektivische Darstellung des Strahlengangs im Tragkörper (ohne Darstellung der Mikro-Strukturen)
- Fig. 5 - 7: je eine Detailskizze in grösserer Darstellung.

In den Figuren bezeichnen gleiche Bezugszeichen gleiche Teile. Merkmale verschiedener Ausführungsformen können miteinander kombiniert werden.

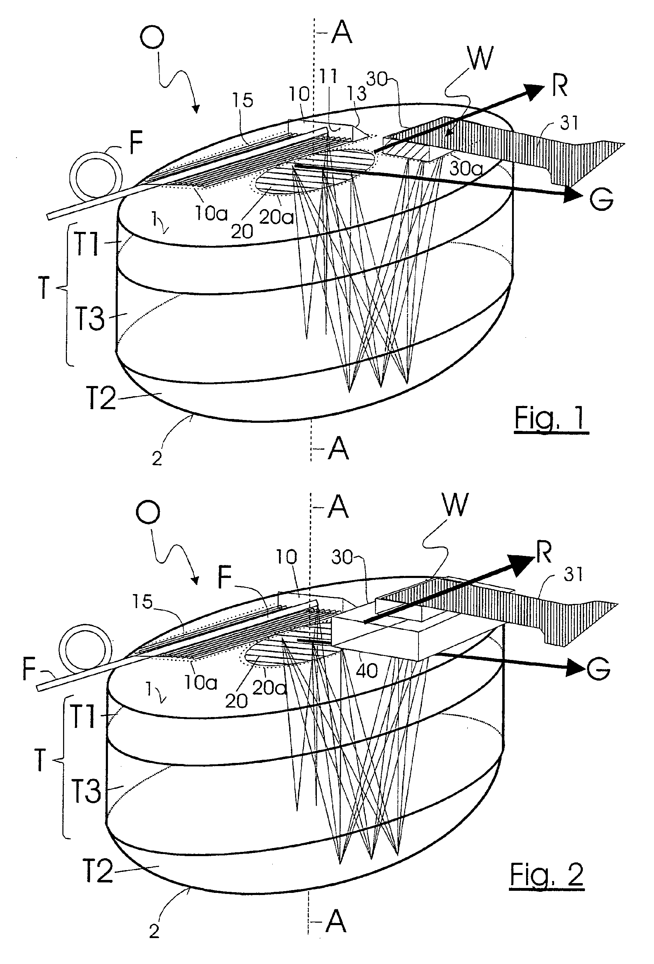

Das in Fig. 1 dargestellte Spektrometer umfasst im wesentlichen zwei Hauptkomponenten, nämlich eine als Ganzes mit O bezeichnete Optikanordnung und eine gesamthaft mit W bezeichnete fotoelektrische Wandleranordnung W.

Die fotoelektrische Wandleranordnung W ist beispielsweise durch ein handelsübliches lineares CMOS-Fotodiodenfeld z.B. des Typs S5463-256 von Hamamatsu oder durch eine ebenfalls handelsübliche CCD-Detektormatrix realisiert. Sie umfasst einen üblicherweise in ein nicht dargestelltes Detektorgehäuse eingebauten Detektor-Chip 30 mit den darin befindlichen Fotodioden. Zur Verbindung mit einer externen Ansteuer- und Auswerteelektronik, die hier nicht dargestellt ist, kann z.B. ein Flachbandkabel 31 vorgesehen sein. Solche Fotodiodenfelder und ihre elektrische Ansteuerung sind dem Fachmann - auch im Zusammenhang mit Spektrometern, siehe z.B. die eingangs erwähnte EP-A-O 489 286 - bekannt und bedürfen daher keiner näheren Erläuterung.

Die Optikanordnung O besteht im wesentlichen aus einem für den interessierenden Wellenlängenbereich im wesentlichen transparenten Tragkörper T, der alle für die spektrale Zerlegung des Messlichts erforderlichen optischen Komponenten enthält. Der Tragkörper T hat äusserlich die Gestalt eines Zylinders mit einer aufgesetzten Kalotte, d.h. er besitzt eine im wesentlichen ebene erste Begrenzungsfläche 1 und eine dieser gegenüberliegende, rotationssymmetrisch sphärisch oder parabolisch gekrümmte, (nach innen) konkave zweite Begrenzungsfläche 2 sowie eine nicht bezeichnete zylindrische Mantelfläche, die jedoch für die Funktion der Optikanordnung unwesentlich ist. Die Ebene der ersten Begrenzungsfläche 1 steht vorzugsweise senkrecht zur Achse A der rotationssymmetrischen zweiten Begrenzungsfläche 2.

In bzw. an der ebenen ersten Begrenzungsfläche 1 des Tragkörpers T sind eine einen Messlichteinlass bildende Einkopplungsstruktur in Form eines Mikroprismas 10 und ein Reflexionsbeugungsgitter 20 angeordnet. Ebenfalls auf der ersten Begrenzungsfläche 1 des Tragkörpers T ist der Detektor-Chip 30 der Wandleranordnung W angeordnet. Zum Zwecke der einfacheren Herstellung und Justierbarkeit ist das Reflexionsbeugungsgitter 20 im wesentlichen eben und ohne Aberrationskorrektur ausgebildet und zentrisch zur Rotationsachse A der konkaven Begrenzungsfläche 2 angeordnet, wobei die Richtung G der Gitterfurchen parallel orientiert ist zu einer Verbindungslinie zwischen dem Lichteinlass und einem mittleren Punkt des flächigen Bereichs (30 a), in dem die Brennflecke der einzelnen Spektralanteile liegen.

Das die Einkopplungsstruktur bildende Mikroprisma 10 besitzt eine zur ersten Begrenzungsfläche 1 im wesentlichen senkrechte Lichteintrittsfläche 11, eine zur Begrenzungsfläche 1 parallele Lichtaustrittsfläche 12 und eine um etwa 45° zu dieser geneigte, z.B. durch eine aufgedampfte Aluminiumschicht verspiegelte Rückfläche 13. Es lenkt somit ihm parallel zur ersten Begrenzungsfläche 1 zugeführtes Messlicht um den doppelten Prismenwinkel um und koppelt es in einen kleinen definierten Winkel zur Rotationsachse A der zweiten Begrenzungsfläche 2 in den Tragkörper T ein. Das Mikroprisma 10 ist vorzugsweise direkt an die Begrenzungsfläche 1 angeformt bzw. an dieser ausgebildet, wobei dann die Lichtaustrittsfläche 12 nicht körperlich vorhanden ist.

Unmittelbar vor dem Mikroprisma 10 ist an der ersten Begrenzungsfläche 1 eine aus mehreren zur Lichteintrittsfläche 11 des Mikroprismas 10 senkrecht verlaufenden Rillen bestehende Rillenstruktur 15 ausgebildet, deren beispielsweise 16 Rillen vorzugsweise einen V-förmigen Querschnitt aufweisen und beispielsweise je etwa 170 *µ*m breit und 100 *µ*m tief sind. Diese Rillenstruktur 15 dient zur Positionierung einer (oder mehrerer) Lichtleitfasern F auf der ersten Begrenzungsfläche 1, über welche Lichtleitfaser das zu analysierende Messlicht dem Mikroprisma 10 und damit dem Tragkörper T des Spektrometers zugeführt wird. Das Lichtaustrittsende der Lichtleitfaser(n) ist mittels eines indexangepassten Klebers direkt an der Lichteintrittsfläche 11 des Mikroprismas 10 befestigt. Die Befestigung der Lichtleitfaser(n) auf dem Tragkörper T erfolgt in geeigneter Weise (z.B. durch Verklebung) und ist der Übersichtlichkeit halber nicht dargestellt.

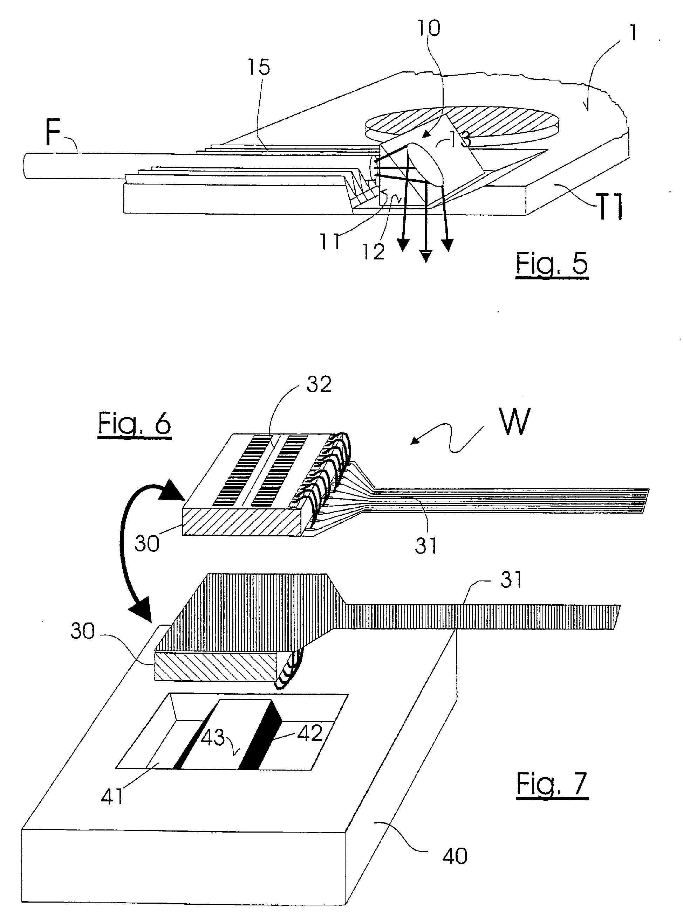

Die Fig. 5 zeigt die Ausbildung des Mikroprismas 10 und die der Rillenstruktur 15 in grösserem Detail.

Die Ausbildung der Einkopplungsstruktur mit einem Umlenkprisma erlaubt die Lichtzuführung parallel zur ersten Begrenzungsfläche 1 des Tragkörpers, wodurch eine wesentlich geringere Bauhöhe des gesamten Spektrometers als bei der herkömmlichen Zuführung senkrecht zur Begrenzungsfläche erreicht wird.

Die Rillenstruktur 15 dient, wie schon erwähnt, der Positionierung der Lichtleitfaser(n) F auf der ersten Begrenzungsfläche 1 des Tragkörpers T, wobei auf einfache Weise eine Zugentlastung und ein Bruchschutz für die Fasern erreicht werden kann. Ferner definiert die Rillenstruktur 15 eine Mehrzahl von wählbaren Einkoppelungspositionen und damit einen weiteren Freiheitsgrad am Ende des Fertigungsprozesses (siehe auch weiter hinten). Im weiteren können, wie ebenfalls schon erwähnt, mehrere Lichtleitfasern F nebeneinander vorgesehen sein, über die Licht von mehreren verschiedenen Lichtquellen oder von ein und derselben Lichtquelle zugeführt werden kann. Im letzteren Fall ergibt sich dadurch einfach eine Erhöhung des Lichtdurchsatzes, währen im ersteren Fall die sequentielle Erfassung mehrerer Lichtquellen ohne zusätzlichen optischen Multiplexer möglich ist

Das Reflexionsbeugungsgitter 20 ist direkt in der ersten Begrenzungsfläche 1 des Tragkörpers T durch eine entsprechende lokale Oberflächenstrukturierung der Begrenzungsfläche und eine auf dieser Oberflächenstrukturierung aufgebrachte Reflexionsbeschichtung gebildet, wobei die Gitterfürchen in Richtung G orientiert sind Typischerweise ist das Reflexionsbeugungsgitter 20 ein im wesentlichen ebenes , nicht aberrationskorrigiertes Strichgitter mit 800 Linien pro mm. Die Reflexionsbeschichtung besteht für spektrale Messanwendungen im sichtbaren Spektralbereich vorzugsweise aus Aluminium.

Die zweite Begrenzungsfläche 2 des Tragkörpers ist aussen mit einer hochreflektierenden Beschichtung, z.B. einer aufgedampften Aluminium-Beschichtung, versehen und bildet somit (von innen gesehen) einen sphärischen oder parabolischen Konkavspiegel. Wie aus den nachstehenden Ausführungen hervorgeht, wird der Konkavspiegel nur in zwei relativ kleinen Bereichen mit Licht beaufschlagt. Es ist deshalb auch möglich, nicht die gesamte Oberfläche der zweiten Begrenzungsfläche 2 zu verspiegeln, sondern nur die von Licht beaufschlagten Bereiche (Segmente). Auf diese Weise kann einerseits eine bessere Streulichtunterdrückung erreicht werden und anderseits kann dadurch auch die effektive numerische Apertur reduziert und der verfügbare Wellenlängenbereich beeinflusst werden. Auch können so weitere höhere Beugungsordnungen unterdrückt werden. Anstelle zweier diskreter kann natürlich auch ein zusammenhängendes einzelnes Segment der zweiten Begrenzungsfläche verspiegelt sein.

Wie aus der Fig. 1 deutlich wird, weist das Spektrometer einen gefalteten Strahlengang auf, wobei das Messlicht auf seinem Weg vom Lichteinlass (Mikroprisma 10) bis zur Wandleranordnung W insgesamt dreimal - einmal am Reflexionsbeugungsgitter 20 und zweimal an der konkaven zweiten Begrenzungsfläche 2 des Tragkörpers T - reflektiert wird. Dadurch wird bei grosser Fokallänge eine sehr kurze Bauform erreicht. Das über die Lichtleitfaser F im wesentlichen parallel zur ersten Begrenzungsfläche 1 zugeführte Messlicht wird vom Mikroprisma 10 um den doppelten Prismenwinkel umgelenkt, so dass es im wesentlichen senkrecht zur ersten Begrenzungsfläche 1 (mit einer durch die Lichtleitfaser F gegebenen numerischen Apertur) in den Tragkörper T eintritt. Es wird dann von der konkaven zweiten Begrenzungsfläche 2 ein erstes Mal reflektiert und auf das Reflexionsbeugungsgitter 20 an der ersten Begrenzungsfläche 1 kollimiert. Wegen der gewählten Richtung G der Gitterfurchen des Reflexionsbeugungungsgitters 20 wird von diesem das Messlicht dann zurück auf die verspiegelte zweite Begrenzungsfläche 2 geworfen, wobei in an sich bekannter Weise gleichzeitig eine räumliche Auftrennung nach Wellenlängen (Dispersion) erfolgt.
Die Richtung der spektralen Aufspaltung R steht dabei annähernd senkrecht zu einer Verbindungslinie zwischen dem Lichteinlass und einem mittleren Punkt des flächigen Bereichs (30 a), in dem die Brennflecke der einzelnen Spektralanteile liegen.
Nun wird das Messlicht ein zweites Mal an der zweiten Begrenzungsfläche 2 reflektiert und schliesslich auf die Wandleranordnung W gelenkt. Die Abmessungen des Tragkörpers T und die Positionierung des Lichteinlasses 10, des Reflexionsgitters 20 und der Wandleranordnung W, d.h. die optischen Pfade des Messlichts sind dabei so gewählt, dass der austretende, nach Wellenlängen aufgefächerte Strahlengang am Ort der Wandleranordnung W fokussiert wird, so dass die Brennebene des austretenden Strahlengangs mit den lichtempfindlichen Elementen (Fotodioden) im Detektor-Chip 30 der Wandleranordnung zusammenfällt. Die einzelnen, typischerweise je 25 µm breiten Fotodioden des zeilenförmigen Fotodiodenfelds werden somit von Licht unterschiedlicher Wellenlängen beaufschlagt, und die von diesen Fotodioden erzeugten korrespondierenden elektrischen Signale repräsentieren die spektralen Intensitätsanteile des zu analysierenden Messlichts.

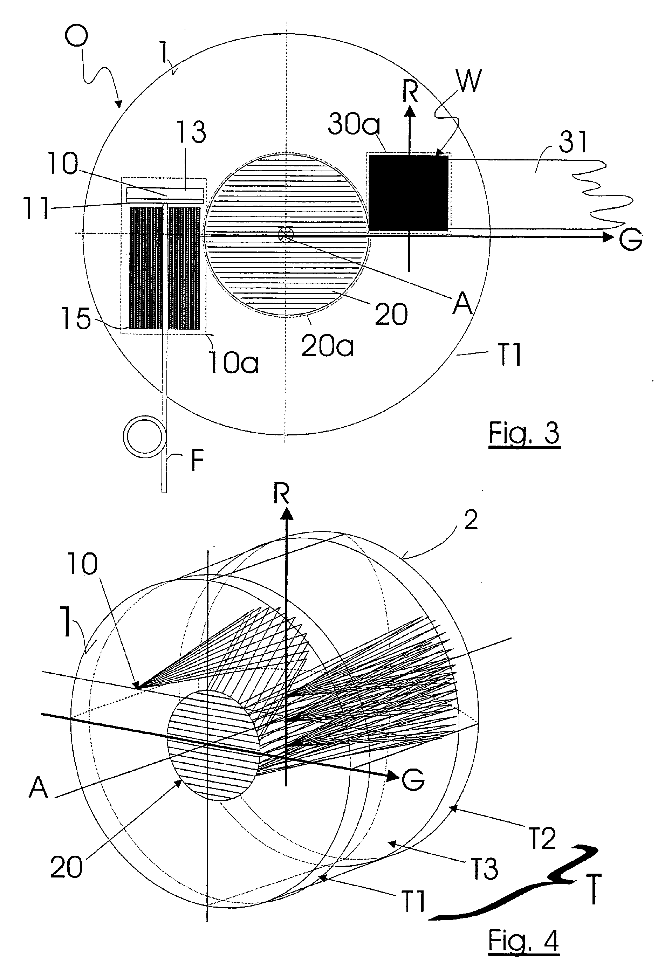

Durch die Reflexion am Konkavspiegel ausserhalb der optischen Achse tritt ein inhärenter Abbildungsfehler auf, der die Auflösung beeinträchtigt. Durch die vorgeschlagenen Anordnung des Lichteinlass und der Orientierung des Gitters kann - im Gegensatz zu der, in der Patentschrift US 4.744.618 in Fig. 11 gezeigten, positiven Beugungsordnung - eine negative Beugungsordnung verwendet werden, so dass der Lichteinlass und die Auslassfläche relativ zu der Dispersionsrichtung R auf der gleichen Seite des Gitters zu liegen kommen, wie in den Figuren 3 und 4 gezeigt. Durch den gezielten Einsatz der Position des Lichteinlasses 10 und einer negativen Beugungsordnung, wie oben beschrieben, wird zumindest in die resultierende Richtung R der spektralen Aufspaltung eine weitgehende Kompensation der Abbildungsfehler erreicht und so eine Aufweitung der Brennflecke in Dispersionsrichtung R klein gehalten, wodurch eine gute Wellenlängenauflösung erzielt wird. Ebenfalls durch den gezielten Einsatz der Position des Lichteinlasses 10 in der vorgeschlagenen Anordnung von Lichteinlass und Gitter wirken sich alle weiteren Abbildungsfehler nur noch als Stigmatismus, genauer gesagt, als im wesentlichen senkrecht zur der Dispersionsrichtung R längliche Elongation der Brennflecke aus, ohne die Auflösung des Spektrometers zu reduzieren. Durch die Verwendung angepasster Fotodioden mit unsymmetrischer Form der einzelnen Fotodiodenfelder wird das Licht in den länglichen Brennflecken vollständig erfasst und der Stigmatismus hat keine nachteiligen Auswirkungen auf die Auflösung oder die Transmissionseffizienz. Vorzugsweise wird für das Spektrometer ein Fotodiodenfeld verwendet, dessen einzelne Fotodioden eine rechteckige wirksame Fläche aufweisen, beispielsweise etwa 25 *µ*m in Längsrichtung (Breite) und etwa 500 *µ*m in Querrichtung (Höhe).

Aus dem Vorstehenden und den Figuren 3 und 4 wird ersichtlich, dass beim zugrundeliegenden optischen Konzept des Spektrometers eine konische Diffraktion stattfindet. Diese ist dadurch charakterisiert, dass anstelle der sonst üblichen geraden Brennlinie die Brennlinie bei der konischen Diffraktion gekrümmt ist. Die Krümmung ist jedoch so ausgeprägt, so dass dadurch keine nennenswerten Fehler entstehen, sofern nur die wirksame Höhe (quer zur Längsrichtung) der einzelnen lichtempfindlichen Elemente (Fotodioden, Pixelhöhe) der Wandleranordnung ausreichend gross ist, was aber auf die für diese Zwecke typischerweise eingesetzten kommerziell erhältlichen Fotodiodenfelder zutrifft.

Durch die gewählte Anordnung des Lichteinlasses und der Orientierung G der Gitterfurchen kann mit Verwendung eines gegen die Ebene 1 unverkippten, ebenen, nicht aberrationskorrigierten Gitters trotz einfachster Anordnung und daraus resultierender einfacher Herstellbarkeit eine Auflösung erzielt werden, die bei vergleichbarer Grösse und numerischer Apertur mit anderen Spektrometeranordnungen nur durch herstellungstechnologisch vergleichsweise aufwendige Massnahmen (z.B in der Patentschrift US 4.744.618 "Demultiplexer" durch eine Verkippung des Gitters aus der Senkrechten zur Achse 40 in Fig. 11 derselben Patentschrift) realisiert werden können.

In Fig. 2 ist eine leicht abgewandelte Form des erfindungsgemässen Spektrometers dargestellt. Es unterscheidet sich vom Ausführungsbeispiel der Fig. 1 im wesentlichen nur dadurch, dass der Detektor-Chip 30 der Wandleranordnung W nicht direkt sondern über einen zumindest teilweise transparenten Abstandshalter 40 auf der ersten Begrenzungsfläche 1 des Tragkörpers T angeordnet ist, wobei dieser Abstandshalter 40 entweder ein aufgekittetes separates Bauteil oder auch direkt an der ersten Begrenzungsfläche 1 angeformt bzw. ausgebildet sein kann.

Die Figuren 6 und 7 zeigen den Abstandshalter 40 und die Montage der Wandleranordnung W in grösserem Detail. Fig. 6 zeigt eine typische, als Fotodiodenfeld ausgebildete Wandleranordnung in Untersicht, wobei neben dem Detektor-Chip 30 und dem Flachbandkabel 31 unter anderem auch die hier offen zugänglichen Fotodioden 32 zu erkennen sind. Der Abstandshalter 40 besitzt an seiner Oberseite eine Vertiefung 41, in der sich eine Brücke 42 mit einer ebenen Passfläche 43 befindet. Der Detektor-Chip 30 wird nun so auf dem Abstandshalter 40 befestigt, dass seine Fotodioden 32 unmittelbar auf der Passfläche 43 der Brücke 42 zu liegen kommen. Es versteht sich, dass der Abstandshalter 40 zumindest im Bereich seiner Brücke 42 transparent ist.

Der Vorteil der Montage der Wandleranordnung W auf einem Abstandshalter 40 gegenüber der Montage direkt auf der ersten Begrenzungsfläche 1 liegt darin, dass durch entsprechende Anpassung der Höhe des Abstandshalters eventuelle Fertigungstoleranzen des (übrigen) Tragkörpers T ausgeglichen werden können, so dass die Fotodioden der Wandleranordnung W optimal in der Brennebene des Strahlengangs positioniert werden können. Durch gezielte Materialwahl des Abstandshalters 40 können auch die spektralen Transparenz- und Blockierungseigenschaften gezielt eingestellt werden.

Wenngleich fertigungstechnisch vorteilhaft, so ist es für das optische Konzept des erfindungsgemässen Spektrometers keineswegs erforderlich, dass die erste Begrenzungsfläche 1 durchgehend eben ist. Wesentlich ist lediglich, dass sie ebene, koplanare oder parallel zueinander versetzte Teilbereiche bzw. Teilflächen aufweist, in denen die optischen Mikrostrukturen des Lichteinlasses 10 und des Reflexionsbeugungsgitters 20 sowie der Ankopplung des Detektor-Chips 30 der Wandleranordnung W angeordnet sind. In den gezeigten Ausführungsbeispielen sind diese Teilflächen die von der Rillenstruktur 15 und dem Mikroprisma 10 belegte Fläche 10a, die vom Reflexionsbeugungsgitter 20 belegte Fläche 20a und die vom Detektor-Chip 30 belegte Fläche 30a bzw. die ebene Passfläche 43 des Abstandshalters 40.

Der Tragkörper T besteht vorzugsweise aus einem transparenten Kunststoff, welcher spritzgiessfähig und/oder wärmeverformbar (wärmeprägbar) ist. Geeignete Polymermaterialien sind z.B. Polycarbonate, PMMA, COC, UVT, Degalan und dergleichen, wobei sich die Auswahl des Polymermaterials nach dessen Transmissionseigenschaften bezüglich der interessierenden Wellenlängenbereiche richtet. Aus fertigungstechnischen Gründen ist es vorteilhaft, den Tragkörper T aus mindestens zwei, vorzugsweise drei Teilkörpern zusammenzusetzen und mit einem entsprechend indexangepassten Kleber zu verkitten. Die Figuren 1 und 2 zeigen eine bevorzugte Aufteilung des Tragkörpers in drei Teilkörper T1, T2 und T3. Der erste Tragkörper T1 ist im wesentlichen als relativ dünne Scheibe ausgebildet und weist die erste Begrenzungsfläche 1 mit den schon erwähnten optischen Strukturen auf. Der zweite Teilkörper T2 hat die Gestalt einer relativ dünnen PlankonvexLinse und weist die zweite, verspiegelte Begrenzungsfläche 2 auf. Der dritte Teilkörper T3 schliesslich ist rein zylindrisch und befindet sich zwischen den beiden anderen Teilkörpern T1 und T2. Seine Funktion besteht lediglich darin, dem ganzen Tragkörper die erforderliche Höhe zu verleihen, so dass die Brennebene des austretenden Strahlengangs in der oder in geringem Abstand zu der ersten Begrenzungsfläche 1 zu liegen kommt. Die drei Teilkörper sind vorzugsweise mit nicht gezeigten mechanischen Strukturen versehen, welche die gegenseitige Ausrichtung beim Zusammenbau erleichtern.

Die Lage der Brennebene des austretenden Strahlengangs kann, wie schon gesagt, durch entsprechende Bemessung der Dicke (Höhe) des dritten Teilkörpers eingestellt werden. Die Brennebene kann in der Ebene des Reflexionsbeugungsgitters 20 (z.B. Fig. 1) oder etwas darüber (z.B. Fig. 2) oder darunter liegen. Dadurch ist eine optimale Anpassung an verschiedene Gehäuseformen der Wandleranordnung möglich. Aus Gründen der Streulichtunterdrückung und wegen der einfacheren Justierbarkeit ist es vorteilhaft, einen an die geometrische Gestalt der eingesetzten Wandleranordnung angepassten Abstandshalter 40 vorzusehen, der entweder als separates Bauteil auf die erste Begrenzungsfläche aufgekittet oder als Mikrostruktur direkt an derselben ausgebildet sein kann. Selbstverständlich kann zwischen dem Tragkörper T und den lichtempfindlichen Elementen der Wandleranordnung auch ein Luftspalt vorhanden sein. Dies ergibt sich z.B. dann, wenn die Fotodioden im Detektorgehäuse nicht direkt zugänglich sind, sondern hinter einem Fenster liegen. In diesem Falle befindet sich die Brennebene des austretenden Strahlengangs dann im geeigneten Abstand über der ersten Begrenzungsfläche, wobei die Feinposition des Detektorgehäuses bzw. des Detektor-Chips vorzugsweise wieder mittels eines Abstandshalters justiert wird.

Das optische Konzept (spezielle Anordnung des Lichteinlasses und Orientierung des im wesentlichen ebenen Reflexionsbeugungsgitters zur Verwendung in negativer Beugungsordnung, so dass Lichtein- und -auskopplung auf einer Seite des Gitter liegen, gefalteter Strahlengang, ,) und die Aufteilung des Tragkörpers in Teilkörper ermöglichen eine besonders einfache und kostengünstige Serien-Herstellung des Spektrometers unter Einsatz vergleichsweise günstiger Replikationstechniken wie z.B. Spritzgiessen und Wärmeprägung und Extrudieren. Alternativ ist eine Herstellung durch Giessverfahren mit thermisch oder durch UV- oder Mikrowellen-Strahlung aushärtbaren Kunststoffen auf Kunststoff- oder Glassubstraten möglich. Das optische Konzept ermöglicht ferner eine sehr kompakte Bauweise und schafft damit die Voraussetzungen für eine Miniaturisierung des Spektrometers. Der Tragkörper T der Figuren 1 und 2 ist typischerweise nur rund 22 mm breit (Durchmesser) und rund 18 mm hoch, wobei der Krümmungsradius der zweiten Begrenzungsfläche 2 etwa 31 mm beträgt. Trotz dieser geringen Abmessungen wird mit einem handelsüblichen Fotodiodenfeld als Wandleranordnung immer noch eine spektrale Auflösung von etwa 5-8 nm mit einer 140µm Faser als Lichteingang erreicht.

Der Herstellungsablauf des Spektrometers kann sich typischerweise wie folgt gestalten:
- Herstellung des Teilkörpers T1 mit den auf ihm enthaltenen Strukturen (Einkopplungsstruktur mit Mikroprisma, Struktur des Reflexionsbeugungsgitters, ggf. Abstandshalter) im Spritzgiessverfahren, wobei die optischen Strukturen auch durch Wärmeprägung erzeugt werden können
- Reflexions-Beschichtung der Rückseite des Mikroprismas und der Beugungsgitter-Struktur durch maskiertes Aufdampfen von Aluminium
- Herstellung des Teilkörpers T2 mit der gekrümmten zweiten Begrenzungsfläche im Spritzgiessverfahren
- Ganzflächige oder teilweise (maskierte) Aufbringung der Aluminium-Reflexionsbeschichtung auf die gekrümmte zweite Begrenzungsfläche
- Herstellung des zylindrischen Teilkörpers T3 im Spritzgiessverfahren oder aus extrudiertem Plattenmaterial
- Anbringung und Justierung der Wandleranordnung auf dem Teilkörper T1
- Verkleben der Teilkörper T2 und T3
- Verkleben und Justieren der Teilkörper T1 und T3 (mit angeklebtem T2)
- Anbringung und Verklebung der Lichtleitfaser F
- Schwärzung der gesamten Anordnung.

Die Zufuhr des Messlichts in den Tragkörper T erfolgt, wie schon erwähnt, vorzugsweise durch eine Lichtleitfaser F in Kombination mit der an der ersten Begrenzungsfläche 1 in Form des Mikroprismas 10 ausgebildeten Einkoppelstruktur, wobei die Lichtleitfaser den sonst üblichen Eingangsspalt ersetzt. Als Lichtleitfaser F ist beispielsweise eine handelsübliche 100/140 *µ*m Indexgradientenfaser geeignet. Ferner können aber auch Fasern mit kleineren Kernen bis hinunter zu 8 *µ*m Single Mode Fasern und 125 µm Cladding Fasern eingesetzt werden. Für erhöhten Lichtdurchsatz können auch zwei oder mehrere Lichtleitfasern gleichzeitig eingesetzt werden, wobei natürlich die Pixelgrösse der Wandleranordnung W berücksichtigt werden muss. Beispielsweise können bei einer zulässigen Pixelgrösse von 0,5 mm der Wandleranordnung bis zu drei 100/140 *µ*m Indexgradientenfasern gleichzeitig benutzt werden. Bei Verwendung einer Lichtleitfaser mit dickerem Kern kann auch ein Eintrittsspalt (z.B. bis zu 100µm x 700µm) vorgesehen sein, der z.B. direkt am Mikroprisma 10 ausgebildet sein kann. Die Befestigung der Lichtleitfasern in der Rillenstruktur 15 auf der Begrenzungsfläche 1 kann z.B. durch Überkleben mit einem Stück Float-Glas erfolgen.

Durch Zufuhr von Messlicht durch z.B. drei Fasern in benachbarten Rillen der Rillenstruktur 15 kann ein zeitlich sequentieller Drei- bzw. Mehrkanalbetrieb ohne zusaätzlichen externen Faser-Multiplexer erreicht werden. Diese Funktion ist im Zusammenhang mit der Durchführung von Wellenlängenkalibrationen und der Messung eines Referenz-Spektrums von wesentlichem Vorteil.

Das Streulicht-Verhalten des erfindungsgemässen Spektrometers kann durch verschiedene Massnahmen verbessert werden. So lässt sich z.B. die numerische Apertur durch Begrenzung der reflektierenden Bereiche auf der zweiten Begrenzungsfläche reduzieren. Ferner können in der Einkoppelstruktur, speziell auf dem Mikroprisma 10, Spaltmasken angebracht werden. Weiters können zwischen den einzelnen Teilkörpern T1 und T3 bzw. T3 und T2 des Tragkörpers T Masken angeordnet werden. Und schliesslich können z.B. mittels zwischen den Teilkörpern angeordneter oder der Wandleranordnung vorgeschalteter Filter unerwünschte bzw. nicht interessierende Wellenlängenbereiche ausgefiltert werden.

Das erfindungsgemäße Spektrometer umfasst zusammengefaßt insbesondere eine Optikanordnung zum Auffangen von Messlicht und zur Aufspaltung desselben in Spektralanteile und eine von den Spektralanteilen des Messlichts beaufschlagte fotoelektrische Wandleranordnung zum Umwandeln der Spektralanteile in entsprechende elektrische Signale. Die Optikanordnung (O) weist einen im wesentlichen transparenten Tragkörper (T) auf, der im wesentlichen durch zwei gegenüberliegende Begrenzungsflächen (1,2) begrenzt ist und an dem ein Reflexionsbeugungsgitter (20) und die Wandleranordnung (W) angeordnet sind und dem das Messlicht über einen Lichteinlass (10) zuführbar ist. Durch die gewählte Anordnung von Lichteinlasses (10) und Orientierung des im wesentlichen ebenen Reflexionsbeugungsgitters (G) erfolgt die spektralen Aufspaltung annähernd senkrecht zu einer Verbindungslinie zwischen dem Lichteinlass und einem mittleren Punkt des flächigen Bereichs (30 a), in dem die Brennflecke der einzelnen Spektralanteile liegen. Der Lichteinlass (10), das ebene Reflexionsbeugungsgitter (20) und die Wandleranordnung (W) sind auf der Seite der ersten (1) der beiden Begrenzungsflächen (1,2) des Tragkörpers (T) angeordnet, und die zweite (2) der beiden Begrenzungsflächen (1,2) ist ganz oder teilweise als vorzugsweise rotationssymmetrischer, nach innen reflektierender Konkavspiegel ausgebildet. Der Tragkörper (T) besteht vollständig aus einem transparenten Kunststoff und umfasst drei optisch miteinander verbundene Teilkörper (T1,T2,T3), von denen ein erster Teilkörper (T1) die erste Begrenzungsfläche (1) und ein zweiter Teilkörper (T2) die zweite Begrenzungsfläche (2) des Tragkörpers (T) aufweist und ein dritter Teilkörper (T3) zwischen dem ersten und dem zweiten Teilkörper (T1,T2) angeordnet ist. An der ersten Begrenzungsfläche (1) sind optisch wirksame Mikrostrukturen vorgesehen, welche den Lichteinlass (10) und das Reflexionsbeugungsgitter (20) bilden. Die Zuführung des Messlichts erfolgt über eine oder mehrere Lichtleitfasern (F) parallel zur ersten Begrenzungsfläche (1), wobei die an der Fläche 1 angebrachten wirksame Mikrostrukturen eine einfache Montage dieser Faser oder Fasern ermöglicht.

Das Spektrometer bietet die Voraussetzungen für eine starke Miniaturisierung und eignet sich sehr gut für eine einfache und kostengünstige Serienfertigung.

## Patentansprüche

1. Spektrometer mit einer Optikanordnung (O) zum Auffangen von Messlicht und zur Aufspaltung desselben in Spektralanteile mit einem Lichteinlass (10); einem Reflexionsbeugungsgitter (20) und einer Auslassfläche (30a), bei der das spektrale zerlegte Messlicht austritt, wobei die Optikanordnung (O) einen zumindest zum Teil im Wesentlichen transparenten Tragkörper (T) aufweist, der durch zwei gegenüberliegende Begrenzungsflächen (1,2) begrenzt ist, wobei der Lichteinlass (10), das Reflexionsbeugungsgitter (20) und die Auslassfläche auf der Seite der Ersten (1) der beiden Begrenzungsflächen (1,2) des Tragkörpers (T) angeordnet sind und die Zweite (2) der beiden Begrenzungsflächen (1, 2) einen reflektierenden Konkavspiegel aufweist, der das eintretende Licht kollimiert und auf das Reflexionsbeugungsgitter (20) reflektiert und das vom Reflexionsbeugungsgitter (20) gebeugte Licht auf die Auslassfläche (30a) fokussiert,
**dadurch gekennzeichnet, dass**
der Lichteinlass (10) und die Auslassfläche (30a) voneinander beabstandet sind und die Richtung (G) der Gitterfurchen parallel zu einer Verbindungslinie zwischen dem Lichteinlass (10) und einem mittleren Punkt der Auslassfläche (30a) orientiert ist so dass die Dispersion (R) des Lichtes in der Auslassfläche (30a) zumindest in etwa senkrecht zu einer Verbindungslinie zwischen dem Lichteinlass (10) und der Auslassfläche ist.

2. Spektrometer nach Anspruch 1, **dadurch gekennzeichnet, dass** das Reflexionsgitter zumindest in etwa eben ist.

3. Spektrometer nach einem der vorangehenden Ansprüche, **dadurch gekennzeichnet, dass** an der ersten Begrenzungsfläche (1) optisch wirksame Mikrostrukturen vorgesehen sind, welche den Lichteinlass (10) und das Reflexionsbeugungsgitter (20) bilden.

4. Spektrometer nach einem der vorangehenden Ansprüche, **dadurch gekennzeichnet, dass** die erste Begrenzungsfläche (1) koplanare oder parallele ebene Teilflächen (10a, 20a, 30a) aufweist, in denen der Lichteinlass (10), das Reflexionsbeugungsgitter (20) und eine Wandleranordnung (W) angeordnet sind.

5. Spektrometer nach einem der vorangehenden Ansprüche, **dadurch gekennzeichnet, dass** das Reflexionsbeugungsgitter (20) zumindest in etwa in einer Ebene senkrecht zu der Rotationsachse (A) der zweiten Begrenzungsfläche (2) in der Teilfläche angeordnet ist.

6. Spektrometer nach einem der vorangehenden Ansprüche, **dadurch gekennzeichnet, dass** die zweite Begrenzungsfläche (2) sphärisch oder parabolisch ausgebildet und ganz oder teilweise mit einer hochreflektierenden Beschichtung, insbesondere einer Aluminium-Beschichtung versehen ist.

7. Spektrometer nach einem der vorangehenden Ansprüche, **dadurch gekennzeichnet, dass** der Lichteinlass (10) durch eine an der ersten Begrenzungsfläche (1) oder an einer ebenen Teilfläche (10a) derselben vorgesehene, ein Mikroprisma (10) umfassende Einkopplungsstruktur (10,15) gebildet ist, welche das Messlicht in einen relativ kleinen Winkelbereich zur Rotationsachse (A) der zweiten Begrenzungsfläche (2) in den Tragkörper (T) einkoppelt.

8. Spektrometer nach Anspruch 7, **dadurch gekennzeichnet, dass** die Einkopplungsstruktur (10,15) eine vorzugsweise im Querschnitt im wesentlichen V-förmige Rillenstruktur (15) zur mechanischen Positionierung mindestens einer Lichtleitfaser (F) relativ zum Mikroprisma (10) aufweist, über welche Lichtleitfaser (F) das Messlicht zuführbar ist.

9. Spektrometer nach Anspruch 7 oder 8, **dadurch gekennzeichnet, dass** das Mikroprisma (10) und die Rillenstruktur (15) direkt an der ersten Begrenzungsfläche (1) des Tragkörpers (T) angeformt bzw. ausgebildet sind.

10. Spektrometer nach einem der vorangehenden Ansprüche, **dadurch gekennzeichnet, dass** das Reflexionsbeugungsgitter (20) durch eine entsprechende lokale Oberflächenstrukturierung der ersten Begrenzungsfläche (1) des Tragkörpers (T) in Verbindung mit einer auf der lokalen Oberflächenstrukturierung angebrachten Reflexionsbeschichtung gebildet ist.

11. Spektrometer nach einem der vorangehenden Ansprüche, **dadurch gekennzeichnet, dass** der Tragkörper (T) aus im wesentlichen transparentem, durch Druck, Wärme und/oder Strahlungseinwirkung, insbesondere UV-Strahlung härtbarem und/oder wärmeverformbarem Kunststoff besteht.

12. Spektrometer nach einem der vorangehenden Ansprüche, **dadurch gekennzeichnet, dass** der Tragkörper (T) wenigstens zwei optisch miteinander verbundene Teilkörper (T1,T2) umfasst, von denen ein erster Teilkörper (T1) die erste Begrenzungsfläche (1) und ein zweiter Teilkörper (T2) die zweite Begrenzungsfläche (2) des Tragkörpers (T) aufweist.

13. Spektrometer nach einem der vorangehenden Ansprüche, **dadurch gekennzeichnet, dass** der Tragkörper (T) wenigstens drei optisch miteinander verbundene Teilkörper (T1,T2,T3) umfasst, von denen ein erster Teilkörper (T1) die erste Begrenzungsfläche (1) und ein zweiter Teilkörper (T2) die zweite Begrenzungsfläche (2) des Tragkörpers (T) aufweist und ein dritter Teilkörper (T3) zwischen dem ersten und dem zweiten Teilkörper (T1,T2) angeordnet ist.

14. Spektrometer nach Anspruch 13, **dadurch gekennzeichnet, dass** der erste und der dritte Teilkörper (T1,T3) im wesentlichen planparallel und der zweite Teilkörper (T2) im wesentlichen plan-konvex ausgebildet sind.

15. Spektrometer nach einem der vorangehenden Ansprüche, **dadurch gekennzeichnet, dass** an der ersten Begrenzungsfläche (1) ein planparalleler Abstandshalter (40) für eine Wandleranordnung (W) angeordnet oder ausgebildet ist.

16. Spektrometer nach einem der vorangehenden Ansprüche, **dadurch gekennzeichnet, dass** es zwei oder mehrere Lichtleitfasern (F) zur Zufuhr von Messlicht von einer oder zwei bzw. mehreren Messlichtquellen aufweist.

## Claims

1. Spectrometer with an optical arrangement (O) for intercepting measurement light and for dividing it into spectral portions, with a light entrance (10), a reflection diffraction grating (20) and an exit area (30a), at which the spectrally decomposed measurement light leaves, wherein the optical arrangement (O) comprises an at least partially substantially transparent carrying body (T) which is delimited by two opposing boundary surfaces (1, 2), wherein the light entrance (10), the reflection diffraction grating (20) and the exit area are arranged on the side of the first (1) of the two boundary surfaces (1, 2) of the carrying body (T) and the second (2) of the two boundary surfaces (1, 2) comprises a reflecting concave mirror which collimates the entering light and reflects it onto the reflection diffraction grating and focuses the light diffracted by the reflection diffraction grating (20) onto the exit area (30a),
**characterised in that**
the light entrance (10) and the exit area (30a) are spaced apart from each other and the direction (G) of the grooves is orientated so as to be parallel to a connection line between the light entrance (10) and a middle point of the exit area (30a) in such a way that the dispersion (R) of the light in the exit area (30a) is at least approximately perpendicular to a connection line between the light entrance (10) and the exit area.

2. Spectrometer according to claim 1, **characterised in that** the reflection grating is at least approximately planar.

3. Spectrometer according to one of the preceding claims, **characterised in that** optically effective microstructures are provided on the first boundary surface (1) which form the light entrance (10) and the reflection diffraction grating (20).

4. Spectrometer according to one of the preceding claims, **characterised in that** the first boundary surface (1) comprises coplanar or parallel planar sub-areas (10a, 20a, 30a), in which the light entrance (10), the reflection diffraction grating (20) and a converter arrangement (W) are arranged.

5. Spectrometer according to one of the preceding claims, **characterised in that** the reflection diffraction grating (20) is arranged at least approximately in a plane perpendicularly to the rotation axis (A) of the second boundary surface (2) in the sub-area.

6. Spectrometer according to one of the preceding claims, **characterised in that** the second boundary surface (2) is formed spherically or parabolically and is provided fully or partially with a highly reflective coating, particularly an aluminium coating.

7. Spectrometer according to one of the preceding claims, **characterised in that** the light entrance (10) is formed by an in-coupling structure (10, 15) comprising a microprism (10) provided on the first boundary surface (1) or on a planar sub-area (10a) thereof, said in-coupling structure (10, 15) in-coupling the measurement light into a relatively small angle region to the rotation axis (A) of the second boundary surface (2) into the carrying body (T).

8. Spectrometer according to claim 7, **characterised in that** the in-coupling structure (10, 15) comprises a groove structure (15) with a preferably substantially V-shaped cross-section for the mechanical positioning of at least one optical fibre (F) with respect to the microprism (10), via which optical fibres (F) the measurement light can be supplied.

9. Spectrometer according to claim 7 or 8, **characterised in that** the microprism (10) and the groove structure (15) are directly formed on the first boundary surface (1) of the carrying body (T).

10. Spectrometer according to one of the preceding claims, **characterised in that** the reflection diffraction grating (20) is formed by a corresponding local surface structuring of the first boundary surface (1) of the carrying body (T) in connection with a reflection coating arranged on the local surface structuring.

11. Spectrometer according to one of the preceding claims, **characterised in that** the carrying body (T) consists of substantially transparent plastic which can be hardened through pressure, heat and / or radiation effect, particularly UV radiation and / or can be thermally deformed.

12. Spectrometer according to one of the preceding claims, **characterised in that** the carrying body (T) comprises at least two optically interconnected sub-bodies (T1, T2), of which a first sub-body (T1) comprises the first boundary surface (1) and a second sub-body (T2) comprises the second boundary surface (2) of the carrying body (T).

13. Spectrometer according to one of the preceding claims, **characterised in that** the carrying body (T) comprises at least three optically interconnected sub-bodies (T1, T2, T3), of which a first sub-body (T1) comprises the first boundary surface (1) and a second sub-body (T2) comprises the second boundary surface (2) of the carrying body and a third sub-body (T3) is arranged between the first and the second sub-body (T1, T2).

14. Spectrometer according to claim 13, **characterised in that** the first and the third sub-body (T1, T3) are formed so as to be substantially plano-parallel and the second sub-body (T2) substantially plano-convex.

15. Spectrometer according to one of the preceding claims, **characterised in that** on the first boundary surface (1) a piano-parallel space maintaining element (4) for a converter arrangement (W) is arranged or formed.

16. Spectrometer according to one of the preceding claims, **characterised in that** it comprises two or more optical fibres (F) for the supply of measurement light from one or two or more measurement light sources.

## Revendications

1. Spectromètre comprenant un agencement optique (O) pour capturer la lumière de mesure et pour la dissocier en fractions spectrales avec une entrée de lumière (10), un réseau de diffraction de réflexion (20) et une surface de sortie (30a), sur laquelle sort la lumière de mesure décomposée spectrale, l'agencement optique (O) présentant un corps porteur (T) au moins en partie sensiblement transparent, qui est délimité par deux surfaces de délimitation (1, 2) opposées, l'entrée de lumière (10), le réseau de diffraction de réflexion (20) et la surface de sortie étant disposés sur le côté de la première des deux surfaces de délimitation (1, 2) du corps porteur (T) et la seconde (2) des deux surfaces de délimitation (1, 2) présentant un miroir concave réfléchissant, qui collimate la lumière entrante et la réfléchit sur le réseau de diffraction de réflexion (20) et focalise la lumière diffractée par le réseau de diffraction de réflexion (20) sur la surface de sortie (30a),
**caractérisé en ce que**
l'entrée de lumière (10) et la surface de sortie (30a) sont espacées l'une de l'autre et la direction (G) des sillons de réseau est orientée parallèlement à une ligne de liaison entre l'entrée de lumière (10) et un point central de la surface de sortie (30a), de sorte que la dispersion (R) de la lumière dans la surface de sortie (30a) est au moins à peu près perpendiculaire à une ligne de liaison entre l'entrée de lumière (10) et la surface de sortie.

2. Spectromètre selon la revendication 1, **caractérisé en ce que** le réseau de réflexion est au moins à peu près plan.

3. Spectromètre selon l'une quelconque des revendications précédentes, **caractérisé en ce que** des microstructures efficaces au plan optique, qui forment l'entrée de lumière (10) et le réseau de diffraction de réflexion (20), sont prévues sur la première surface de délimitation (1).

4. Spectromètre selon l'une quelconque des revendications précédentes, **caractérisé en ce que** la première surface de délimitation (1) présente des surfaces partielles (10a, 20a, 30a) planes, coplanaires ou parallèles, dans lesquelles sont disposés l'entrée de lumière (10), le réseau de diffraction de réflexion (20) et un dispositif convertisseur (W).

5. Spectromètre selon l'une quelconque des revendications précédentes, **caractérisé en ce que** le réseau de diffraction de réflexion (20) est disposé au moins à peu près dans un plan perpendiculairement à l'axe de rotation (A) de la seconde surface de délimitation (2) dans la surface partielle.

6. Spectromètre selon l'une quelconque des revendications précédentes, **caractérisé en ce que** la seconde surface de délimitation (2) est conçue de façon sphérique ou parabolique et est pourvue totalement ou en partie d'un revêtement à haute réflexion, en particulier d'un revêtement en aluminium.

7. Spectromètre selon l'une quelconque des revendications précédentes, **caractérisé en ce que** l'entrée de lumière (10) est formée par une structure d'injection (10, 15) prévue sur la première surface de délimitation (1) ou sur une surface partielle (10a) plane de celle-ci, comprenant un microprisme (10), qui injecte la lumière de mesure dans une plage d'angle relativement petite par rapport à l'axe de rotation (A) de la seconde surface de délimitation (2) dans le corps porteur (T).

8. Spectromètre selon la revendication 7, **caractérisé en ce que** la structure d'injection (10, 15) présente une structure rainurée (15), de préférence sensiblement en forme de V en section, pour le positionnement mécanique d'au moins une fibre conductrice de lumière (F) par rapport au microprisme (10), fibre conductrice de lumière (F) par laquelle la lumière de mesure peut être amenée.

9. Spectromètre selon la revendication 7 ou 8, **caractérisé en ce que** le microprisme et la structure rainurée (15) sont formés et réalisés directement sur la première surface de délimitation (1) du corps porteur (T).

10. Spectromètre selon l'une quelconque des revendications précédentes, **caractérisé en ce que** le réseau de rétraction de réflexion (20) est formé par une structuration de surface locale appropriée de la première surface de délimitation (1) du corps porteur (T) en liaison avec un revêtement de réflexion placé sur la structuration superficielle locale.

11. Spectromètre selon l'une quelconque des revendications précédentes, **caractérisé en ce que** le corps porteur (T) est à base de plastique sensiblement transparent, pouvant être durci par pression, chaleur et/ou effet de rayonnement, en particulier rayonnement UV et/ou pouvant être déformé par chaleur.

12. Spectromètre selon l'une quelconque des revendications précédentes, **caractérisé en ce que** le corps porteur (T) comprend au moins deux corps partiels (T1, T2) reliés optiquement entre eux, dont le premier corps partiel (T1) présente la première surface de délimitation (1) et un second corps partiel (T2) la seconde surface de délimitation (2) du corps porteur (T).

13. Spectromètre selon l'une quelconque des revendications précédentes, **caractérisé en ce que** le corps porteur (T) comprend au moins trois corps partiels (T1, T2, T3) reliés optiquement entre eux, dont un premier corps partiel (T1) présente la première surface de délimitation (1) et un second corps partiel (T2) la seconde surface de délimitation (2) du corps porteur et un troisième corps partiel (T3) est disposé entre le premier et le second corps partiel (T1, T2).

14. Spectromètre selon la revendication 13, **caractérisé en ce que** le premier et le troisième corps partiels (T1, T3) sont sensiblement plans et parallèles et le second corps partiel (T2) est conçu sensiblement plan et convexe.

15. Spectromètre selon l'une quelconque des revendications précédentes, **caractérisé en ce qu'**un écarteur (40) plan et parallèle pour un dispositif convertisseur (W) est disposé ou réalisé sur la première surface de délimitation (1).

16. Spectromètre selon l'une quelconque des revendications précédentes, **caractérisé en ce qu'**il présente deux ou plusieurs fibres conductrices de lumière (F) pour l'amenée de la lumière de mesure d'une ou de deux ou plusieurs sources de lumière de mesure.
